# EUROPÄISCHE PATENTANMELDUNG

(11) **EP 1 168 270 A2**
(43) Veröffentlichungstag der Anmeldung: **02.01.2002**
(21) Anmeldenummer: 01109896.9
(22) Anmeldetag: 24.04.2001
(51) Int. Cl.: G08B 21/20

(54) **Einrichtung zum Überwachen der Stromverbraucher in einem Stromkreis**

(30) Priorität: 30.06.2000 DE 20011519 U
(71) Anmelder: Servatec GmbH & Co. KG, 57627 Hachenburg (DE)
(72) Erfinder: Brenner, Josef Maria, 57627 Hachenburg (DE)
(74) Vertreter: Hentschel, Peter, Dipl.-Ing.

(57) **Zusammenfassung**

Die Erfindung bezieht sich auf eine Einrichtung zur Überwachung der Stromverbraucher in einem Stromkreis. Diese ist erfindungsgemäß durch folgende Merkmale gekennzeichnet:
- eine Messeinrichtung (1) zum Erfassen der Stromstärke oder einer für diese relevanten Größe im oder in jedem Stromkreis,
- ein Vergleicher (2) zum Vergleichen der oder jeder erfassten Stromstärke oder relevanten Größe mit einem Schwellenwert, wobei der Vergleicher (2) bei Überschreiten des Schwellenwertes ein Steuersignal abgibt,
- eine Messeinrichtung (31) zum Erfassen des Verlassens der Umgrenzung durch eine Person, und
- mindestens einen Signalgeber (32) und/oder mindestens eine Abschalteinrichtung, wobei der Signalgeber einen optischen oder akustischen Alarm abgibt, wenn die Person den Überwachungsbereich verlässt, und wobei die Abschalteinrichtung den Überwachungsbereich abschaltet, wenn sie nicht deaktiviert wird.

Für die Veröffentlichung ist Fig. 1 vorzusehen.

## Beschreibung

Die Erfindung betrifft eine Einrichtung zum Überwachen der Stromverbraucher in einem Stromkreis, bevorzugt einem Haushaltsstromkreis, der einem Versorgungsbereich bzw. Wohnbereich zugeordnet ist.

Versehentlich angeschaltete Stromgeräte, wie etwa Heizlüfter, Bügeleisen oder Herdplatten, haben schon häufig Brände ausgelöst. Obwohl man mit Temperaturfühlern oder Thermostaten Übertemperaturen zu vermeiden wünscht, sind diese Versuche nicht in vollem Maße erfolgreich geblieben, da die normale Betriebstemperatur mancher Elektrogeräte ja schon ausreicht, einen Brand zu verursachen.

Hier liefert die DE 198 25 657 A1 den Versuch einer Abhilfe, indem jedem Elektrogerät, das gefährlich werden könnte, ein Infrarot-Bewegungsmelder zugeordnet wird, der das betreffende Gerät ausschaltet, wenn der Melder feststellt, dass sich niemand mehr in der Nähe des Gerätes aufhält. Nachteilig sind jedoch die hohen Kosten, denn es muss jedes entsprechende Gerät mit einem Bewegungsmelder ausgestattet werden. In einem Haushalt müssten alle Geräte neu angeschafft werden, und außerdem müsste der Infrarotmelder zur Sicherheitsnorm werden, da sonst die Gefahr bestünde, dass nach wie vor brandgefährliche Geräte in den Handel kommen, die keinen Infrarotsensor aufweisen.

Natürlich könnte jeder Versorgungs- und Wohnbereich mit einem Hauptschalter ausgestattet werden, mit dem man beim Verlassen des Bereiches ganz einfach den diesem Bereich zugeordneten Stromkreis abschaltet. Dies ist aber nicht durchführbar, da sich in einem solchen Bereich, also in einem Büro, einer Werkstatt, einem Einfamilienhaus, einer Wohnung o. dgl., regelmäßig Stromverbraucher befinden, die ständig in Betrieb stehen müssen, wie elektrische Uhren bzw. Unterhaltungselektronik, die mit solchen Uhren ausgestattet ist, Kühlgeräte wie Kühlschränke und Tiefkühltruhen, Anrufbeantworter, Kommunikationsgeräte, Dauerversuchseinrichtungen und viele mehr.

Außerdem könnte auf diese Weise eine den Bereich oder Haushalt verlassende Person der oder den im Bereich oder Haushalt verbleibenden Personen versehentlich den Strom abschalten.

Ausgehend von dieser Problematik liegt der Erfindung die Aufgabe zugrunde, eine Einrichtung der eingangs genannten Art zu finden, die einfach, kostengünstig und auch für bereits vorhandene Elektrogeräte nutzbar ist. Ferner soll der Aufwand bei der Installation gering sein. Schließlich soll es nicht möglich sein, dass eine den Bereich oder Haushalt verlassende Person den Strom für eine etwa sich noch im Bereich oder Haushalt aufhaltende Person abschalten kann.

Diese Aufgabe wird erfindungsgemäß dadurch gelöst, dass eine Messeinrichtung zum Erfassen der Stromstärke oder einer für diese relevanten Größe im oder in jedem Stromkreis, ein Vergleicher zum Vergleichen der oder jeder erfassten Stromstärke oder relevanten Größe mit einem Schwellenwert, wobei der Vergleicher bei Überschreiten des Schwellenwertes ein Steuersignal abgibt, eine Messeinrichtung zum Erfassen des Verlassens der Umgrenzung durch eine Person, und mindestens ein Signalgeber und/oder mindestens eine Abschalteinrichtung, wobei der Signalgeber einen optischen oder akustischen Alarm abgibt, wenn die Person die Umgrenzung verlässt, und wobei die Abschalteinrichtung den Überwachungsbereich abschaltet, wenn sie nicht deaktiviert wird.

Der Erfindung liegt die Beobachtung zugrunde, dass in aller Regel alle brandgefährliche Elektrogeräte große Stromverbraucher sind, alle ständig betriebenen Geräte dagegen niedrige Stromverbraucher.

Daher wird ein Schwellenwert gewählt, der unter der Stromstärke liegt, die dann erreicht wird, wenn ein brandgefährliches Elektrogerät betrieben wird, aber von der Gesamtheit der ständig betriebenen Geräte nicht erreicht wird. Der Schwellenwert kann mittels Regler an die jeweilige Anlage angepasst werden.

Wenn die sich im Bereich aufhaltende Person diesen verlässt und gleichzeitig der Strom im überwachten Stromnetz den Schwellenwert übersteigt, dann wird ein elektrisches Steuersignal, das vom Vergleichen ausgeht, von der Messeinrichtung zum Erfassen des Verlassens des Bereiches an den Signalgeber weitergeleitet oder die Messeinrichtung wird veranlasst, ein Steuersignal an diesen abzugeben. Der Signalgeber gibt dann ein optisches oder akustisches Signal ab.

Gemäß einer vorteilhaften Weiterbildung der Erfindung ist an der Eingangstür zum Bereich ein Schalter zum Verhindern des Abschaltens angebracht. Im Umfeld dieser Eingangstür ist bevorzugt ein akustisches Signal angebracht. Dieses Signal kann gegebenenfalls auch auf optisch umgeschaltet werden; dieses optische Signal befindet sich an einer Stelle, die im Blickfeld einer den Bereich verlassenden Person liegt.

Jedesmal, wenn die Eingangstür geöffnet wird, fällt der Blick einer den Bereich verlassenden Person auf das Lichtsignal, dessen Aufleuchten somit nicht der Aufmerksamkeit entgehen kann.

Soweit es mehrere Eingangstüren gibt, wird jede mit einer Messeinrichtung, bevorzugt einem Öffnungsschalter, und einem zugeordneten Signalgeber ausgestattet.

Die Montage der erfindungsgemäßen Einrichtung ist einfach und unkompliziert: im Zählerschrank oder Stromkreisverteiler des Stromkreises werden die Messeinrichtung für die Stromstärke und der Vergleicher untergebracht. Diese Messeinrichtung kann ganz oder teilweise als einfaches Einbaugerät ausgebildet sein, das in die Phasen des Stromnetzes eingeschleift wird.

Öffnungsschalter und Lichtsignalgeber werden an der Eingangstür angebracht und eine Schwachstromleitung verbindet diese mit dem Zählerschrank oder Stromkreisverteiler. Die Schwachstromleitung ist unauffällig und kann auf das Mauerwerk oder den Verputz aufgeklebt werden.

Dabei ist bevorzugt mindestens ein Teil der Messeinrichtung mit dem Signalgeber und mit der Bestätigungseinrichtung oder dem Schalter zum Deaktivieren der Abschalteinrichtung zu einer Geräteeinheit zusammengefasst.

Der Vergleicher und die Abschalteinrichtung, soweit vorgesehen, sind in einer Steuerelektronik untergebracht.

Die Verbindung zwischen dieser Steuerelektronik und der Geräteeinheit kann, wie schon oben erwähnt, durch eine Drahtleitung erfolgen. Es ist aber auch vorteilhaft, anstelle der Drahtleitung eine drahtlose Verbindung vorzusehen. Bevorzugt ist eine Funkverbindung im UKW-Bereich vorgesehen.

In jedem existenten Bereich kann eine entsprechende, erfindungsgemäße Einrichtung in kurzer Zeit installiert werden. Es werden danach Elektrogeräte aller Bauarten und Sicherheitsstufen in gleicher Weise überwacht.

Es ist bevorzugt aber auch möglich, einzelne Stromkreise auszusparen, etwa den Stromkreis für die Warmwasseraufbereitung oder Stromkreise für die Beleuchtung, an die keine Steckdose angeschlossen ist. Auf diese Weise kann die Warmwasseraufbereitung, die ja vollautomatisch arbeitet, kein Signal auslösen, ebenso die Hauptbeleuchtung eines großen Bereiches, die etwa zum Schutz vor Einbrechern abends oft eingeschaltet bleibt, obwohl sich niemand im Bereich aufhält.

Manche brandgefährlichen Elektrogeräte, etwa Bügeleisen, haben ein Thermostat, dass das Gerät bei Erreichen einer oberen Solltemperatur ausschaltet und bei Erreichen einer unteren Solltemperatur wieder einschaltet.

Damit auch solche Geräte von der erfindungsgemäßen Einrichtung angezeigt werden können, ist diese nach einer bevorzugten Ausgestaltung der Erfindung mit einer Verzögerungseinrichtung versehen, die nach dem Beenden einer Überschreitung des Sollwertes die Abgabe eines Steuersignals an den Signalgeber noch für eine gewisse Zeit aufrechterhält, die länger ist als der Zeitraum zwischen Aus- und Einschalten thermostatgesteuerter Elektrogeräte. Da dieser Zeitraum üblicherweise 7 Minuten nicht übersteigt, werden 10 Minuten für ausreichend angesehen, innerhalb derer die Verzögerungseinrichtung die Abgabe des Steuersignals weiter aufrechterhält.

Zwar kann die Verzögerungseinrichtung im Grenzfall kurz nach Abschalten eines brandgefährlichen Elektrogerätes zu einem Fehlalarm führen, aber es unterbleibt kein Alarm, solange noch ein brandgefährliches Elektrogerät angeschaltet bleibt, selbst wenn es eine Betriebspause haben sollte.

Bevorzugt weist die Messeinrichtung zum Erfassen der Stromstärke einen Wandler auf, der die gemessene Stromstärke reduziert und diesen Wert an eine Elektronik weitergibt. Dabei ist bevorzugt ein Wandler für jede Phase vorgesehen; bei ankommendem Drehstrom sind also drei Wandler vorgesehen, die ihre Ausgangswerte an eine Elektronik weitergeben, in der die Stromstärke oder ein für diese repräsentativer Wert mit einem Sollwert verglichen wird, der für den Betrieb eines brandgefährlichen Elektrogerätes repräsentativ ist.

Die mittels der erfindungsgemäßen Einrichtung verarbeiteten Werte sind teils abhängig von den örtlichen Bedingungen, etwa der Sollwert, das Wandlungsverhältnis der Wandler, die Verzögerung oder interne Werte. Bevorzugt ist mindestens einer dieser Werte einstellbar, so dass die erfindungsgemäße Einrichtung stets im optimalen Bereich betrieben werden kann.

In der beiliegenden Zeichnungen sind zwei bevorzugte Ausführungsbeispiele der Erfindung schematisch dargestellt.
Fig. 1 zeigt den Schaltplan für ein erstes Ausführungsbeispiel, bei dem alle drei Phasen einer Drehstromleitung überwacht werden,
Fig. 2 zeigt einen Übersichtsschaltplan für eine Wohnung, wobei nur ein Teil des Wohnbereiches überwacht wird,
Fig. 3 zeigt den Schaltplan der Fig. 1, bei dem jedoch der Signalgeber modifiziert ist, und
Fig. 4 zeigt den Schaltplan einer modifizierten Ausführungsform.

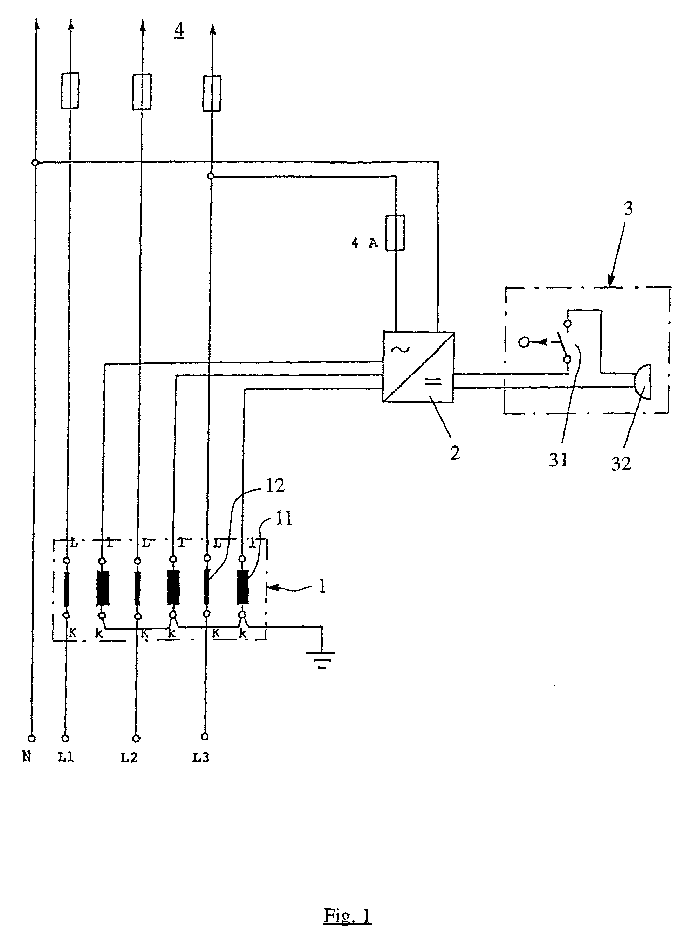

Der Schaltplan der Fig. 1 zeigt einen Nulleiter N und drei stromführende Leiter L1, L2 und L3 eines Drehstrom-Stromkreises, die im Verteilerkasten (nicht dargestellt) eines Büros, einer Werkstatt, eines Haushaltes o. dgl. ankommen und zu Verbrauchern 4 weiterführen.

In jeden der stromführenden Leiter L1 bis L3 ist jeweils eine Primärspule 12 eingeschleift, die einen Messwiderstand bildet. Jeder der Primärspulen 12 ist eine Sekundärspule 11 zugeordnet. Diese Anordnung aus den Primär- und Sekundärspulen 12, 11 bildet einen Wandlersatz 1, dessen Ausgänge einem Vergleicher zugeleitet werden, der in einer Steuerelektronik 2 untergebracht ist.

Die Steuerelektronik 2 bildet eine Baueinheit mit Anschlüssen, an die die ankommenden und abgehenden Leitungen angeschlossen werden. Diese Baugruppe kann Stellglieder aufweisen, um sie an die individuellen Bedürfnisse anzupassen.

Wenn die mittels des Wandlersatzes 1 vorgenommene Messung in der Steuerelektronik 2 verglichen wird und einen Sollwert übersteigt, dann wird ein Steuersignal an den Signalgeber 3 abgegeben. Wenn die Messung den Sollwert wieder unterschreitet, dann bleibt dennoch das Steuersignal für eine vorbestimmte Zeit weiter aufrechterhalten, um so die An- und Ausschaltperiode eines Thermostaten in einem brandgefährlichen Elektrogerät zu überbrücken.

Der Signalgeber 3 weist einen als Arbeitsschalter ausgebildeten Türschalter 31 auf, der in Reihe mit einem akustischen Alarmgeber 32 geschaltet ist. Dieser Türschalter 31 ist an der Haupteingangstür zum Wohnbereich angeordnet. Wird die Tür (nicht gezeigt) geöffnet, dann schließt der Schalter 31, und wenn ein Steuersignal vorliegt (also ein brandgefährliches Elektrogerät eingeschaltet ist), dann gibt der akustische Alarmgeber 32 ein Warngeräusch ab.

Wenn der Wohnbereich mehr als einen Eingang aufweist, dann ist jedem dieser Eingänge ein Signalgeber 3 zugeordnet; alle Signalgeber 3 sind parallelgeschaltet.

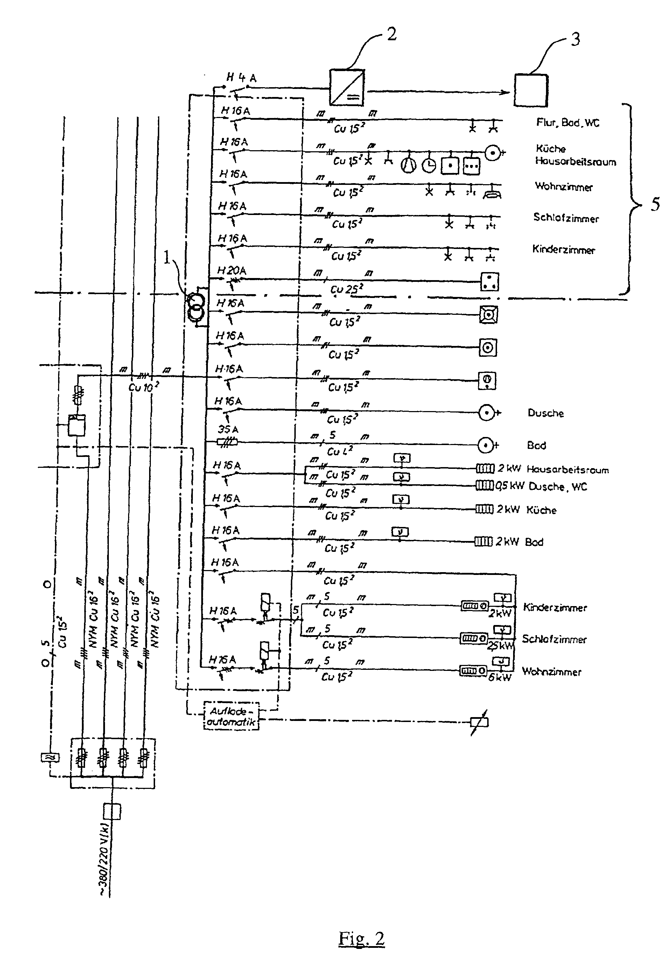

In Fig. 2 ist der Übersichtsschaltplan für eine Wohnung gezeigt. Hierbei sind die einzelnen Stromkreise jeweils durch einen Automaten abgesichert. Ein Wandler 1 überwacht den durch einen Überwachungsbereich 5 fließenden Strom und steuert eine Elektronik 2 an, die ihrerseits bei Überschreiten des Schwellenwertes für den Strom ein Steuersignal abgibt und damit einen Signalgeber ansteuert, der in Fig. 2 der Einfachheit halber nicht gezeigt ist.

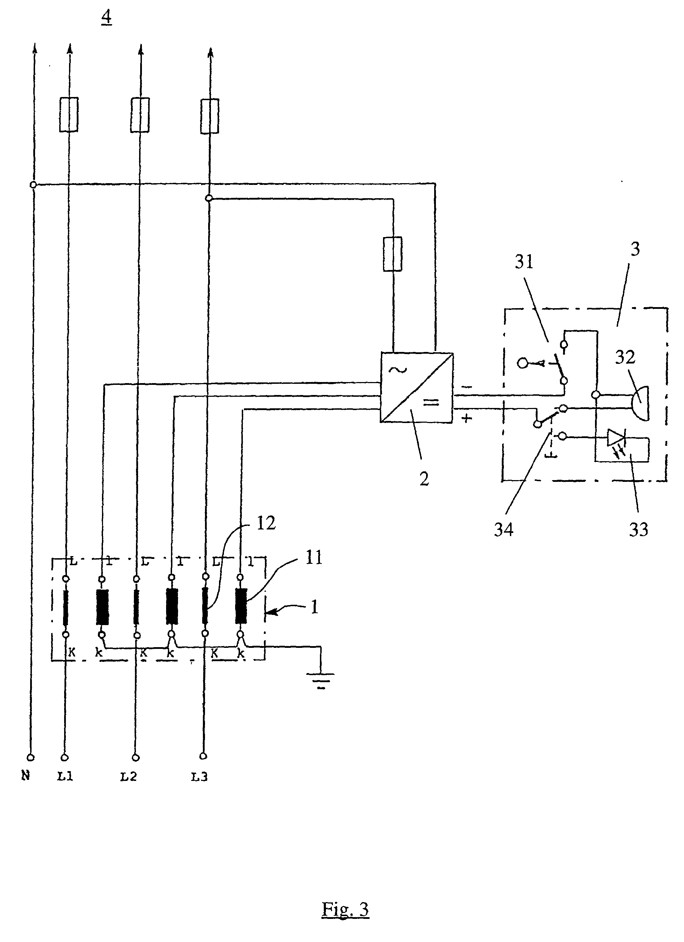

In Fig. 3 ist die Schaltung der Fig. 1 gezeigt, jedoch mit modifiziertem Signalgeber 3. Dieser weist neben dem akustischen Alarmgeber 32 auch einen Geber 33 für ein optisches Warnsignal auf, der hier in Form einer Leuchtdiode dargestellt ist, aber auch anders ausgeführt sein könnte. Ein handbetätigbarer Umschalter 34 ist vorgesehen, um den Betrieb zwischen dem akustischen Alarmgeber 32 und dem optischen Signalgeber 33 wahlweise umzuschalten, etwa nachts, wenn das Alarmgeräusch des akustischen Alarmgebers 32 für Nachbarn störend sein könnte.

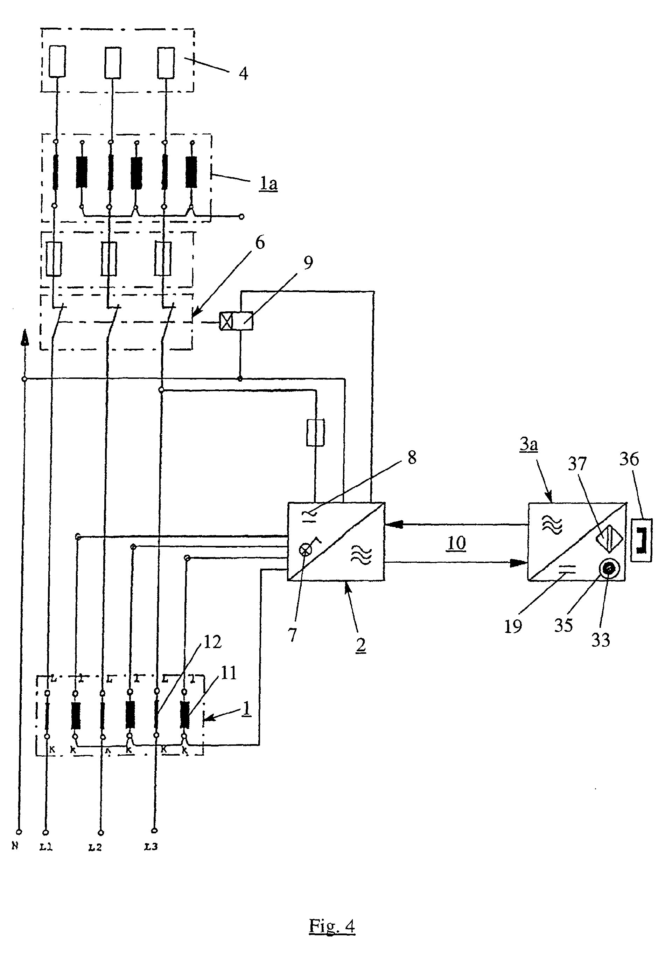

Fig. 4 zeigt den Schaltplan einer modifizierten Ausführungsform, die besonders für die Wohnung einer alleinstehenden, älteren Person bestimmt ist.

Dieser Stromkreis entspricht zum Teil dem der Fig. 1; gleiche Bezugszeichen sind für entsprechende Elemente verwendet, die hier nicht weiter erläutert werden.

Der Stromkreis der Fig. 4 weist zusätzliche Wandler 1a für die Überwachung separater Stromkreise auf, die für sich einzelne, neuralgische Stromkreise zusätzlich absichern.

Die Steuerelektronik 2 ist mit einer Stromversorgung 8 versehen, die vom Netz betrieben wird. Ferner enthält die Steuerelektronik einen Aktivierungsschalter 7, der eine Abschalteinrichtung 6 über einen Elektromagneten 9 ansteuert. Der Aktivierungsschalter 7 kann aber auch in der Geräteeinheit 3a untergebracht sein.

Die Geräteeinheit 3a wird an der Wohnungstür einem stationären Permanentmagneten 36 gegenüberliegend angebracht.

Die Geräteeinheit 3a enthält einen Reed-Schalter 37, der beim Öffnen der Wohnungstür seinen Schaltzustand verändert und so ein Signal abgibt. Darüber hinaus weist die Messeinrichtung 37 (Reed-Schalter) einen Doppelspeicher zum Erfassen des Verlassens der Umgrenzung durch eine Person auf, wobei drei Schaltzustände erfasst und gespeichert werden:
1. Wohnungstür auf.
2. Wohungstür zu.
3. Nichtbetätigung der Bestätigungseinrichtung 35.

Ferner weist die Geräteeinheit 3a einen Batteriesatz 19 und eine Alarmeinrichtung 33 auf, die mit dem Bestätigungstaster 35- bzw. Aktivierungsschalter 7 gekoppelt ist. Eine Funkverbindung 10 zwischen der Steuerelektronik 2 und der Geräteeinheit 3a ersetzt die Drahtleitung der Fig. 1.

Die Wirkungsweise der modifizierten Schaltung der Fig. 4 unterscheidet sich von der des Ausführungsbeispiels der Fig. 1 bis 3 durch den Aktivierungsschalter 7, die Abschalteinrichtung 6 und den Deaktivierungsschalter 35. Ferner sind Wandler 1a für untergeordnete Stromkreise vorgesehen.

Ist der Aktivierungsschalter 7 unwirksam, was durch Umschalten von Hand bewirkt werden kann, dann ist die Wirkungsweise der Schaltung im wesentlichen gleich der der Schaltung der Fig. 1: bei Verlassen der Wohnung und eingeschaltetem Elektrogerät mit hohem Stromverbrauch schlägt die Alarmeinrichtung 33 an.

Hat zum Beispiel der Bewohner vergessen, das Bügeleisen auszuschalten, und übersieht er auch den Alarm 33, dann wird die Abschalteinrichtung 6 durch die Schützspule 9 abgeschaltet, die ihrerseits von der Steuereinheit 2 über den Aktivierungsschalter 7 angesteuert wird.

Ist aber z.B. ein Heizgerät angeschaltet, das angeschaltet bleiben soll, dann kann der Bewohner beim Anschlagen des Alarmes 33 auf den Bestätigungstaster 7 drücken und so verhindern, dass die Abschalteinrichtung 6 über den Aktivierungsschalter 7 und den Schützspule 9 angesteuert wird. Der Strom bleibt eingeschaltet.

Die Funkverbindung 10 erleichtert den Einbau der erfindungsgemäßen Einrichtung und verhindert, dass bei späteren Montagearbeiten eine Verbindungsleitung beschädigt werden kann.

Die gezeigten und beschriebenen Ausbildungen sind beispielhaft und bilden keine Einschränkung des Schutzumfanges, aber bevorzugte Ausgestaltungen des Erfindungsgedankens.

## Patentansprüche

1. Einrichtung zur Überwachung der Stromverbraucher in einem umgrenzten Stromkreis, **gekennzeichnet durch** die folgenden Merkmale:
a. eine Messeinrichtung (1) zum Erfassen der Stromstärke oder einer für diese relevanten Größe im oder in jedem Stromkreis,
b. ein Vergleicher (2) zum Vergleichen der oder jeder erfassten Stromstärke oder relevanten Größe mit einem Schwellenwert, wobei der Vergleicher (2) bei Überschreiten des Schwellenwertes ein Steuersignal abgibt,
c. eine Messeinrichtung (31) zum Erfassen des Verlassens der Umgrenzung **durch** eine Person, und
d. mindestens einen Signalgeber (32) und/oder mindestens eine Abschalteinrichtung (6), wobei der Signalgeber einen optischen oder akustischen Alarm abgibt, wenn die Person die Umgrenzung verlässt, und wobei die Abschalteinrichtung (6) den Überwachungsbereich abschaltet, wenn sie nicht deaktiviert wird.

2. Einrichtung nach Anspruch 1, **dadurch gekennzeichnet, dass** der umgrenzte Stromkreis als
- Stromkreis eines Haushaltes, einer Büro- oder Industrielage,
- Stromkreis eines Teils eines Haushaltes, einer Büro- oder Industrielage oder
- Stromkreise mehrerer Teile eines Haushaltes, einer Bürooder Industrielage
ausgebildet ist, wobei der oder jeder Stromkreis einem Versorgungs-, Wohn- und/oder Wirtschaftsbereich zugeordnet ist.

3. Einrichtung nach einem der Ansprüche 1 oder 2, **dadurch gekennzeichnet, dass** zur Deaktivierung der Abschalteinrichtung (6) eine Bestätigungseinrichtung (35) vorgesehen ist, die bei jeder Ansteuerung der Abschalteinrichtung (6) erneut betätigt werden muss.

4. Einrichtung nach Anspruch 3, **dadurch gekennzeichnet, dass** mindestens ein Teil der Messeinrichtung (37), der Signalgeber (33) und die Bestätigungseinrichtung (35) in einer Geräteeinheit (3a) zusammengefasst sind.

5. Einrichtung nach Anspruch 4, **dadurch gekennzeichnet, dass** mindestens der Vergleicher und gegebenenfalls die Abschalteinrichtung zu einer Steuerelektronik (2) zusamnmengefaßt sind.

6. Einrichtung nach den Ansprüchen 4 und 5, **dadurch gekennzeichnet, dass** die Geräteeinheit (3a) und die Steuerelektronik (2) durch eine Leitung verbunden sind.

7. Einrichtung nach den Ansprüchen 4 und 5, **gekennzeichnet durch** eine drahtlose Verbindung, bevorzugt eine Funkverbindung (10), die die Geräteeinheit (3a) und die Steuerelektronik (2) miteinander verbindet.

8. Einrichtung nach einem der Ansprüche 1-7, **gekennzeichnet durch** eine Verzögerungseinrichtung, die das Steuersignal aus dem Vergleicher (2) nach seinem Verschwinden noch für eine bestimmte Zeit aufrechterhält.

9. Einrichtung nach einem der Ansprüche 1 bis 8, **dadurch gekennzeichnet, dass** die Messeinrichtung (1) zum Erfassen der Stromstärke mindestens einen Wandler (11, 12) aufweist, der mindestens einer der Phasen, bevorzugt jeder dieser, zugeordnet ist, und dass der Ausgang des Wandlers (11, 12) einer Elektronik (2) zugeführt wird, die den Vergleicher enthält und das Messsignal abgibt.

10. Einrichtung nach einem der Ansprüche 1 bis 9, **dadurch gekennzeichnet, dass** die Messeinrichtung (31 bzw. 37) ein Eingangstür-Öffnungssensor ist, und dass die Messeinrichtung (37) mit einem Doppelspeicher zum Erfassen des Verlassens der Umgrenzung durch eine Person ausgestattet ist.

11. Einrichtung nach einem der Ansprüche 1 bis 10, **dadurch gekennzeichnet, dass** sie mindestens ein Einstellglied zur Anpassung an vorliegende Betriebsbedingungen aufweist.

12. Einrichtung nach einem der Ansprüche 1 bis 11, **dadurch gekennzeichnet, dass** der Schwellenwert einer Stromstärke entspricht, die bei etwa 600 W Stromverbrauch vorliegt.

13. Einrichtung nach einem der Ansprüche 1 bis 12, **dadurch gekennzeichnet, dass** der Stromkreis nur ein Teil des gesamten Stromnetzes ist, dass das Büro, den Haushalt o. dgl. versorgt.

14. Einrichtung nach einem der Ansprüche 1 bis 13, **dadurch gekennzeichnet, dass** der Doppelspeicher im Öffnungssensor bei Nichtbetätigung der Bestätigungseinrichtung (35) ein Steuersignal zur Abschalteinrichtung (6) gibt.
